# FASCICULE DE BREVET EUROPEEN

(11) **EP 3 922 816 B1**
(45) Date de publication et mention de la délivrance du brevet: **14.02.2024**
(21) Numéro de dépôt: 21305766.4
(22) Date de dépôt: 07.06.2021
(51) Int. Cl.: F01D 5/02, F01D 15/12, F01D 25/18, F02C 7/32, F16N 9/02

(54) **SYSTÈME DE LUBRIFICATION POUR FOURNIR UN FLUIDE AUX CANNELURES D'UN ARBRE D'ENTRAINEMENT**
SCHMIERSYSTEM ZUR FLUIDZUFUHR ZU DEN KEILNUTEN EINER ANTRIEBSWELLE
LUBRICATION SYSTEM FOR SUPPLYING A FLUID TO THE SPLINES OF A DRIVE SHAFT

(30) Priorité: 10.06.2020 FR 2006051
(43) Date de publication de la demande: 15.12.2021
(73) Titulaire: Aero Gearbox International, 92700 Colombes (FR)
(72) Inventeur: LEWIS, Nathan, 77550 MOISSY-CRAMAYEL (FR)
(74) Mandataire: Cabinet Beau de Loménie

(56) Documents cités:
- FR-A1- 2 543 654
- US-A- 3 621 937
- US-A- 3 990 538
- US-A- 5 119 905
- US-A1- 2011 129 291

## Description

### Domaine

La présente invention concerne généralement le domaine des systèmes de lubrification dans un boîtier de relais. Plus spécifiquement, la présente invention concerne un système de lubrification dans un arbre d'entraînement d'un boîtier de relais d'accessoires, en particulier un insert pour amener un fluide aux cannelures d'un arbre d'entraînement et un système pour amener un fluide aux cannelures d'un arbre d'entraînement.

### Contexte

Un moteur de turbine d'un aéronef comprend typiquement un boîtier de relais d'accessoires pour actionner des systèmes d'accessoire entraînés mécaniquement, tels que des pompes à carburant, des pompes hydrauliques et des générateurs électriques, qui sont essentiels pour le fonctionnement du moteur et de l'aéronef. Comme cela est décrit par la demande de brevet français FR2977280A1 (ci-après « la demande '280 »), le boîtier de relais d'accessoires peut habituellement comprendre un ou plusieurs trains d'engrenages. Chaque train d'engrenages peut habituellement être composé d'une pluralité de roues dentées qui peuvent être entraînées en rotation pour entraîner les accessoires grâce à un arbre de transmission. L'arbre de transmission peut être couplé à un arbre de la turbine. Chaque accessoire peut comprendre un arbre d'entraînement d'accessoire comprenant un ou plusieurs ensembles de cannelures qui s'engrènent avec un ensemble de cannelures correspondant d'une roue dentée correspondante, afin d'être entraîné ainsi. De plus, l'arbre de transmission peut comprendre un ou plusieurs ensembles de cannelures qui s'engrènent avec un ensemble correspondant de cannelures d'une roue dentée correspondante afin d'entraîner les roues dentées du train d'engrenages. Le brevet US3621937A divulgue un système de lubrification comprenant un arbre creux qui est adapté pour être sensiblement horizontal en fonctionnement. Monté coaxialement à l'intérieur de l'arbre, un tube d'alimentation en huile est conçu pour être alimenté en lubrifiant à l'une de ses extrémités fixée rigidement à l'arbre pour tourner avec lui. L'autre extrémité du tube est fermée par un capuchon. En fonctionnement, le tube d'alimentation en huile tourne, et toute huile fournie à l'intérieur du tube sera centrifugée axialement le long de celui-ci et sortira du tube jusqu'à l'extérieur du capuchon, le capuchon et l'arbre formant entre eux un réservoir d'huile.

Le brevet US3990538A décrit une capsule de lubrification comprenant une chambre remplie d'une quantité de lubrifiant et un moyen pour libérer le lubrifiant de la chambre lorsque la capsule est en place dans un accouplement. La demande de brevet FR2543654A1 divulgue un système de lubrification d'un arbre flottant dans une boîte de vitesses ou des engrenages planétaires.

En fonctionnement, la lubrification des pièces mobiles dans le boîtier de relais, telles que les cannelures, est nécessaire afin de refroidir, réduire la friction et ainsi optimiser la fonctionnalité et la durée de vie du boîtier de relais. Cependant, de nombreux systèmes de lubrification actuellement disponibles, en particulier des systèmes de lubrification monocoup, ne sont pas capables de fournir une quantité adéquate de lubrification afin de fournir la lubrification à un axe central d'un arbre d'entraînement d'accessoire, et donc à un autre ensemble de cannelures plus éloigné de l'arbre d'entraînement d'accessoire et/ou d'un arbre d'entraînement de couplage.

Il est souhaitable de proposer un système amélioré pour lubrifier des pièces mobiles dans un boîtier de relais qui est capable d'augmenter la quantité de lubrifiant à fournir aux pièces mobiles dans le boîtier de relais, afin de résoudre un ou plusieurs des problèmes techniques décrits ci-dessus.

### Résumé

La présente invention concerne un insert pour fournir un fluide aux cannelures d'un arbre d'entraînement selon la revendication 1.

Selon des aspects de l'invention, l'insert est configuré pour tourner autour d'un axe de rotation.

Selon des aspects de l'invention, l'augmentation d'alimentation de fluide dans la chambre provoque l'exercice de pression sur la surface du piston.

Selon des aspects de l'invention, le piston se déplace axialement le long de la surface externe de la paroi d'insert.

Selon des aspects de l'invention, le déplacement du piston vers la première position force le fluide hors de la chambre.

Selon des aspects de l'invention, l'élément de sollicitation est positionné entre la paroi d'insert et le piston, et l'élément de sollicitation est configuré pour effectuer une transition entre un état étendu et un état comprimé.

Selon des aspects de l'invention, la surface du piston est annulaire.

Selon des aspects de l'invention, le piston est configuré pour réaliser une étanchéité contre la paroi d'insert.

Selon des aspects de l'invention, l'insert comprend une buse configurée pour décharger un jet de fluide.

Selon des aspects de l'invention, la buse est configurée pour amener le fluide à la chambre.

Selon des aspects de l'invention, un système pour amener un fluide aux cannelures d'un arbre d'entraînement comprend un arbre d'entraînement comprenant des cannelures et un déversoir positionné de manière adjacente aux cannelures, l'arbre d'entraînement étant configuré pour tourner autour d'un axe de rotation, un insert selon l'un quelconque des aspects décrits ci-dessus, la paroi d'insert s'étendant de manière concentrique avec l'arbre d'entraînement, et dans lequel une augmentation du fluide dans la chambre pendant la rotation de l'arbre d'entraînement provoque le déplacement du piston vers la seconde position et une diminution du fluide dans la chambre pendant l'arrêt de la rotation de l'arbre d'entraînement provoque le déplacement du piston vers la première position.

Selon des aspects de l'invention, l'insert est en communication avec le déversoir et les cannelures au niveau d'une interface dans l'arbre d'entraînement.

Selon des aspects de l'invention, l'insert comprend la buse décrite ci-dessus et la buse est configurée pour diriger le jet de fluide vers l'axe de rotation et à travers l'interface et au-delà du déversoir jusqu'aux cannelures lorsque la rotation de l'arbre d'entraînement est arrêtée.

Selon des aspects de l'invention, l'insert est fixé à l'arbre d'entraînement pour maintenir la position et empêcher la rotation de l'insert dans l'arbre d'entraînement.

Selon des aspects de l'invention, le piston est configuré pour réaliser une étanchéité contre une surface entourant l'insert dans l'arbre d'entraînement.

Selon des aspects de l'invention, l'insert a un diamètre externe qui est inférieur à un diamètre interne de l'arbre d'entraînement de sorte que la chambre est défini entre l'insert et une surface entourant l'insert dans l'arbre d'entraînement.

Selon des aspects de l'invention, l'insert est configuré pour être alimenté avec le fluide par la buse pendant la rotation de l'arbre d'entraînement.

De la manière décrite et selon les aspects illustrés ici, l'insert et le système sont configurés pour augmenter une quantité de fluide fourni aux pièces mobiles dans un boîtier de relais, de sorte que le fluide est amené aux cannelures de l'arbre d'entraînement, aux cannelures d'un arbre d'entraînement d'accessoire, à un axe central d'un arbre d'entraînement d'accessoire et/ou à un autre ensemble de cannelures plus éloigné de l'arbre d'entraînement d'accessoire et/ou d'un arbre d'entraînement de couplage.

### Brève description des dessins

Les aspects d'un mode de réalisation sont décrits en référence aux dessins, dans lesquels les mêmes numéros de référence désignent les mêmes éléments :
[Fig. 1] La figure 1 est une vue en coupe latérale d'un système de lubrification destiné à être utilisé dans un boîtier de relais (ci-après « le système ») selon les aspects de l'invention;
[Fig. 2] La figure 2 est une vue en perspective latérale du système de la figure 1, représentant un arbre d'entraînement du système en coupe, un insert du système en coupe partielle, un piston du système en coupe et un élément de sollicitation du système en coupe dans un état comprimé ;
[Fig. 3] La figure 3 est une vue partielle agrandie prise sur la figure 2, en insistant sur le piston et l'élément de sollicitation du système ;
[Fig. 4] La figure 4 est une vue en perspective latérale du système de la figure 1, représentant l'arbre d'entraînement du système en coupe, l'insert du système en coupe partielle, le piston du système en coupe et l'élément de sollicitation du système en coupe dans un état étendu ;
[Fig. 5] La figure 5 est une vue agrandie prise sur la figure 4, en insistant sur le piston et l'élément de sollicitation du système ;
[Fig. 6] La figure 6 est une vue en perspective latérale du système selon les aspects de l'invention, représentant l'arbre d'entraînement du système en coupe, l'insert du système en coupe partielle, le piston du système en coupe et l'élément de sollicitation du système en coupe à l'état étendu ;
[Fig. 7] La figure 7 est une vue partielle agrandie prise sur la figure 6, en insistant sur le piston et l'élément de sollicitation du système ;
[Fig. 8] La figure 8 est une vue en perspective latérale du système selon la figure 6, représentant l'arbre d'entraînement du système en coupe, l'insert du système en coupe partielle, le piston du système en coupe, et l'élément de sollicitation du système en coupe à l'état comprimé ;
[Fig. 9] La figure 9 est une vue partielle agrandie prise sur la figure 8, en insistant sur le piston et l'élément de sollicitation du système ;
[Fig. 10A] La figure 10A est une vue en coupe de face de l'insert du système de la figure 1 pendant un état de repos selon les aspects de l'invention ; et
[Fig. 10B] La figure 10B est une vue en coupe de face de l'insert du système de la figure 1 pendant un état de rotation selon les aspects de l'invention.

### Description détaillée

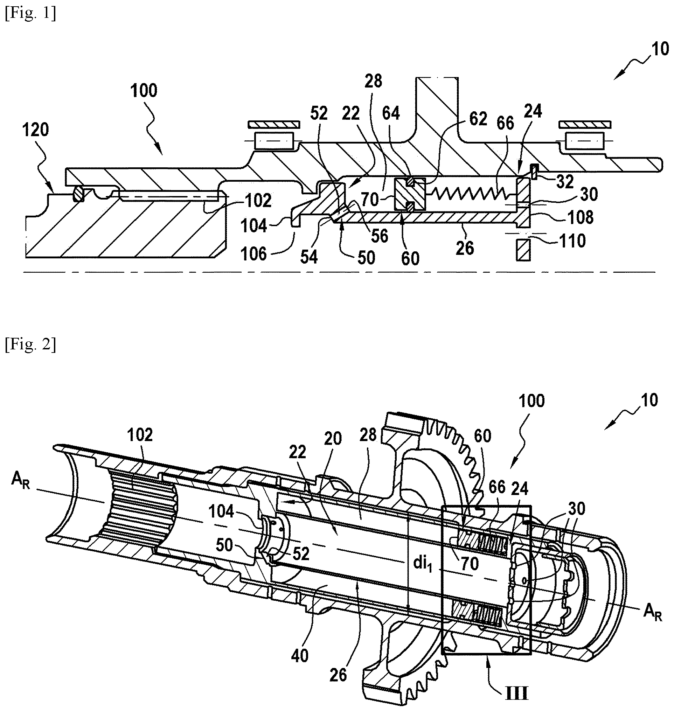

Un mode de réalisation d'un système de lubrification (ci-après « le système ») destiné à être utilisé dans un boîtier de relais selon les aspects de l'invention est décrit maintenant en référence aux figures 1 à 10B, dans lequel les mêmes numéros de référence représentent les mêmes pièces, et est généralement désigné par le numéro de référence 10. En particulier, on décrit un insert 20 du système 10 destiné à être utilisé dans un boîtier de relais selon les aspects de l'invention. Bien que le système 10 et l'insert 20 soient décrits en référence à des exemples spécifiques, il faut comprendre que des modifications et des changements peuvent être apportés à ces exemples sans s'éloigner de la portée générale, telle que définie par les revendications. En particulier, les caractéristiques individuelles des différents modes de réalisation représentés et/ou mentionnés ici, peuvent être combinées dans des modes de réalisation supplémentaires. Par conséquent, la description et les dessins doivent être considérés dans un sens illustratif plutôt que restrictif. Les figures, qui ne sont pas nécessairement à l'échelle, illustrent des aspects illustratifs et ne sont pas prévues pour limiter la portée de l'invention. Les aspects illustratifs illustrés sont prévus uniquement à titre exemplaire.

Le terme « exemplaire » est utilisé dans le sens « d'exemple » plutôt que « idéal ». Alors que les aspects de l'invention sont favorables à différentes modifications et formes en variante, leurs spécificités ont été présentées à titre d'exemple dans les dessins et seront décrites de manière détaillée. Il faut cependant comprendre que l'intention n'est pas de limiter les aspects de l'invention au(x) mode(s) de réalisation particulier(s) décrit(s). Au contraire, l'intention de la présente invention est de couvrir toutes les modifications, tous les équivalents et les variantes se trouvant dans la portée de l'invention, telle que définie par les revendications.

Différents matériaux, procédés de construction et procédés de fixation seront abordés dans le contexte du (des) mode(s) de réalisation décrit(s). L'homme du métier reconnaîtra des substituts connus pour les matériaux, les procédés de construction et les procédés de fixation, dont tous sont envisagés comme étant compatibles avec le(s) mode(s) de réalisation décrit(s) et sont prévus pour être englobés par les revendications jointes.

Lorsqu'un élément ou caractéristique est désigné(e) ici comme étant « sur », « mis(e) en prise avec », « raccordé(e) à » ou « couplé(e) à » un autre élément ou caractéristique, il (elle) peut être directement sur, mis(e) en prise, raccordé(e) ou couplé(e) à un autre élément ou caractéristique, ou des éléments ou caractéristiques intermédiaires peuvent être présents (présentes). En contraste, lorsqu'un élément ou caractéristique est désigné(e) comme étant « directement sur », « directement mis(e) en prise avec », « directement raccordé(e) à » ou « directement couplé(e) à » un autre élément ou caractéristique, il peut ne pas y avoir d'éléments ou caractéristiques intermédiaires. D'autres termes utilisés pour décrire la relation entre des éléments ou des caractéristiques doivent être interprétés d'une manière identique (par exemple, « entre » opposé à « directement entre », « adjacent » opposé à « directement adjacent », etc.).

Les termes relatifs à l'espace, tels que « haut », « bas », « central », « interne », « externe », « au-dessous », « dessous », « inférieur », « au-dessus », « supérieur », et similaires peuvent être utilisés ici par souci de faciliter la description pour décrire la relation d'un élément ou d'une caractéristique par rapport à un(e) autre (d'autres) élément(s) ou caractéristique(s), comme illustré sur les dessins. Les termes relatifs à l'espace peuvent être prévus pour englober différentes orientations d'un dispositif à l'usage ou en fonctionnement en plus de l'orientation illustrée sur les dessins. Par exemple, si le dispositif sur les dessins est retourné, les éléments décrits comme étant « dessous » ou « au-dessous » des autres éléments ou caractéristiques, sont alors orientés « au-dessus » des autres éléments ou caractéristiques. Ainsi, le terme exemplaire « dessous » peut englober à la fois l'orientation de dessus et de dessous. Le dispositif peut être sinon orienté (entraîné en rotation à 90 degrés ou à d'autres orientations) et les descriptifs relatifs à l'espace utilisés ici, interprétés en conséquence.

Bien que les termes « premier », « second », etc. peuvent être utilisés ici pour décrire différents éléments, composants, régions, couches, sections et/ou paramètres, ces éléments, composants, régions, couches, sections et/ou paramètres ne doivent pas être limités par ces termes. Ces termes sont uniquement utilisés pour distinguer un élément, composant, région, couche ou section d'une autre région, couche ou section. Ainsi, un premier élément, composant, région, couche ou section abordé(e) ici peut être qualifié(e) de second élément, composant, région, couche ou section sans pour autant s'éloigner des enseignements de la présente invention.

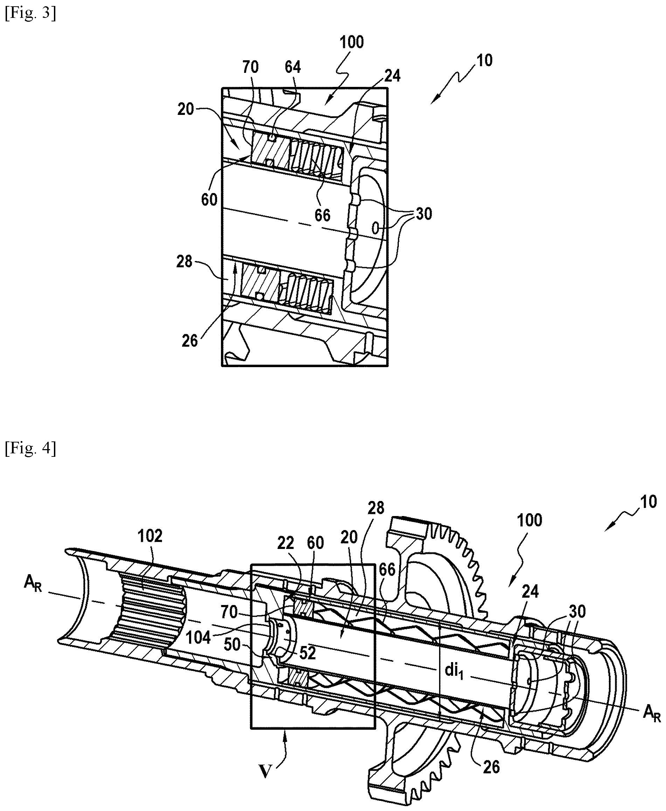

Comme représenté sur les figures 1 à 3, le système 10 est configuré pour être utilisé dans un arbre d'entraînement (arbre de transmission) 100 d'un boîtier de relais d'accessoires (ci-après « le boîtier de relais ») (non représentée) d'un moteur d'aéronef. Cependant, on envisage que le système 10 puisse être configuré pour être utilisé dans un boîtier de relais non dédié aux accessoires. De plus ou en variante, on envisage que le système 10 puisse être configuré pour être utilisé dans une application non aérospatiale. L'arbre d'entraînement 100 a un cycle de fonctionnement comprenant un état de rotation dans lequel l'arbre d'entraînement 100 tourne autour d'un axe de rotation A_{R} (voir les figures 2 - 3, 6 - 7 et 10B). A la fin du cycle de fonctionnement, l'arbre d'entraînement 100 effectue une transition dans un état de repos dans lequel la rotation de l'arbre d'entraînement 100 est arrêtée (voir les figures 4 - 5, 8 - 9 et 10A).

Comme représenté sur la figure 1, le système 10 est configuré pour fournir un fluide 15 à un ou plusieurs ensembles de cannelures 102 dans le boîtier de relais. De plus, on envisage que le fluide 15 puisse être amené vers l'axe de rotation A_{R}. On envisage que le fluide 15 puisse être amené vers les cannelures 102 et/ou vers l'axe de rotation A_{R} une fois par fonctionnement du système 10. Dans le mode de réalisation décrit, le fluide 15 est un lubrifiant configuré pour refroidir, réduire la friction et ainsi optimiser le fonctionnement et la durée de vie des pièces mobiles, telles que les cannelures 102, dans le boîtier de relais. En référence aux figures 1 à 3, les cannelures 102 peuvent être incluses sur ou dans un ou plusieurs parmi l'arbre d'entraînement 100 et un arbre d'entraînement d'accessoire 120. Dans le mode de réalisation décrit, les cannelures 102 sont incluses dans l'arbre d'entraînement 100 et à une extrémité de l'arbre d'entraînement d'accessoire 120. Le système 10 peut être configuré pour fournir le fluide à un joint (joint à cannelures) entre les cannelures 102 de l'arbre d'entraînement 100 et/ou les cannelures 102 de l'arbre d'entraînement d'accessoire 120. De plus ou en variante, les cannelures 102 peuvent être incluses plus loin d'un axe central (centre) de l'arbre d'entraînement d'accessoire 120 et/ou sur un arbre d'entraînement de couplage. Un volume du fluide 15 à amener aux cannelures 102 par le système 10 peut dépendre de la longueur des cannelures 102 et/ou d'un diamètre et de la longueur axiale d'une zone de l'arbre d'entraînement 100 entourant les cannelures 102 où les cannelures doivent baigner dans le fluide 15.

Comme représenté sur la figure 1, l'arbre d'entraînement 100 peut comprendre un premier déversoir 104 positionné dans l'arbre d'entraînement 100. Le premier déversoir 104 est configuré pour obstruer un écoulement du fluide 15 de l'insert 20 aux cannelures 102 dans l'arbre d'entraînement 100. Le premier déversoir 104 est positionné de manière adjacente à et/ou entre les cannelures 102 et une première extrémité 22 de l'insert 20. En variante, on envisage que le premier déversoir 104 puisse être formé de manière solidaire sur l'insert 20 au niveau de la première extrémité 22 de l'insert 20. Dans cet agencement en variante, l'arbre d'entraînement 100 peut comprendre une butée configurée pour fixer le positionnement de l'insert 20 dans l'arbre d'entraînement 100. Une première interface 106 peut être définie entre le premier déversoir 104 et l'insert 20. L'arbre d'entraînement 100 peut comprendre un second déversoir 108 positionné dans l'arbre d'entraînement 100, qui est configuré pour obstruer un écoulement du fluide 15 d'une conduite d'alimentation (non représentée) à l'insert 20 dans l'arbre d'entraînement 100. Le second déversoir 108 est positionné de manière adjacente à et/ou entre la conduite d'alimentation et une seconde extrémité 24 de l'insert 20, qui est opposée à la première extrémité 22 de l'insert 20. Une seconde interface 110 peut être définie entre le second déversoir 108 et l'insert 20. L'insert 20 peut être positionné entre le premier déversoir 104 et le second déversoir 108. Un volume du fluide 15 à amener dans le système 10 peut dépendre d'un diamètre et/ou de la hauteur du premier déversoir 104 et du second déversoir 108. Ainsi, des changements du point de vue du diamètre et/ou de la hauteur des premier et second déversoirs 104, 108 peuvent être réalisés pour contrôler un volume du fluide 15 à amener dans le système 10, ainsi que pour la ventilation dans le système 10 afin d'équilibrer la pression dans le système 10.

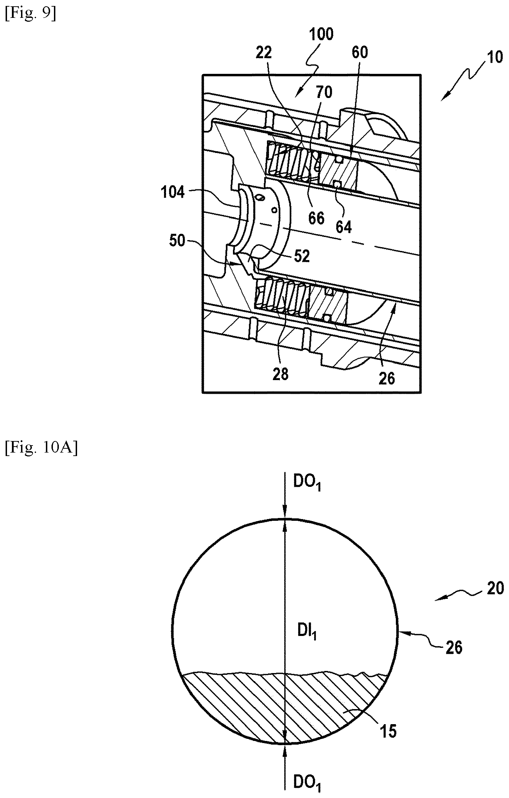

En référence à la figure 1, l'insert 20 du système 10 est configuré pour amener le fluide 15 aux cannelures 102 de l'arbre d'entraînement 100. De plus ou en variante, l'insert 20 du système 10 est configuré pour amener le fluide 15 aux cannelures 102 de l'arbre d'entraînement d'accessoire 120 et à l'axe central de l'arbre d'entraînement d'accessoire 120. L'insert 20 est configuré pour être positionné dans l'arbre d'entraînement 100. L'insert 20 est configuré pour tourner autour de l'axe de rotation A_{R}. L'insert 20 comprend une paroi d'insert 26 s'étendant le long de l'axe de rotation A_{R}. La paroi d'insert 26 s'étend entre la première extrémité 22 et la seconde extrémité 24 de l'insert 20. Dans le mode de réalisation décrit, la paroi d'insert 26 est cylindrique et s'étend de manière concentrique dans l'arbre d'entraînement 100 le long de l'axe de rotation A_{R}. Ainsi, la paroi d'insert 26 comprend des surfaces interne et externe. En référence aux figures 1 et 10A à 10B, l'insert 20 est configuré pour définir une chambre 28. La chambre 28 est définie entre la surface externe de la paroi d'insert 26 et l'arbre d'entraînement 100. Cependant, on envisage que l'insert 20 puisse comprendre une paroi d'insert externe supplémentaire s'étendant de manière concentrique autour de la paroi d'insert 26. Dans cet agencement en variante, la chambre 28 peut être définie entre la paroi d'insert 26 et la paroi d'insert externe supplémentaire, plutôt que l'arbre d'entraînement 100. La chambre 28 est configurée pour stocker du lubrifiant afin d'alimenter les cannelures 102. L'insert 20 définit une ou plusieurs ouvertures 30 au niveau de la seconde extrémité 24 de l'insert 20 pour ventiler l'insert 20 et/ou pour amener le fluide 15 à l'insert 20. Dans le mode de réalisation décrit, les une ou plusieurs ouvertures 30 peuvent être configurées pour amener le fluide 15 dans la paroi d'insert 26. De plus ou en variante, les une ou plusieurs ouvertures 30 peuvent être configurées pour ventiler la chambre 28.

Comme représenté sur la figure 1, l'insert 20 comprend une buse 50. La buse 50 est incluse au niveau de la première extrémité 22 de l'insert 20. La buse 50 est en communication avec la première interface 106 et/ou le premier déversoir 104 et les cannelures 102 de l'arbre d'entraînement 100 et/ou les cannelures 102 et l'axe central de l'arbre d'entraînement d'accessoire 120. La buse 50 est également en communication avec la chambre 28 de l'insert 20. De plus, la buse 50 est en communication avec la conduite d'alimentation. La buse 50 définit un conduit 52 s'étendant à travers la paroi d'insert 26. Le conduit 52 s'étend à partir d'une première ouverture 54 jusqu'à une seconde ouverture 56. La première ouverture 54 est en communication avec la première interface 106 et/ou le premier déversoir 104 et les cannelures 102 de l'arbre d'entraînement 100 et/ou les cannelures 102 et l'axe central de l'arbre d'entraînement d'accessoire 120. Ainsi, la buse 50 est configurée pour diriger un jet de fluide 15 stocké dans la chambre 28 à travers l'interface 106 et au-delà du déversoir 104 de sorte que le jet de fluide 15 est amené aux cannelures 102 de l'arbre d'entraînement 100, aux cannelures 102 de l'arbre d'entraînement d'accessoire 120 et/ou à l'axe central de l'arbre d'entraînement d'accessoire 120. De plus ou en variante, la première ouverture 54 peut être à une première distance radiale de l'axe de rotation A_{R} et la seconde ouverture 56 peut être à une seconde distance radiale de l'axe de rotation A_{R}. On envisage que les différentes distances radiales de la première ouverture 54 et de la seconde ouverture 56 permettent à la buse 50 d'améliorer la direction du jet de fluide 15. La seconde ouverture 56 est en communication avec la chambre 28. De plus, la première ouverture 54 est en communication avec la conduite d'alimentation. Ainsi, la buse 50 est également configurée pour être une entrée et/ou pour amener le fluide 15 à la chambre 28 de l'insert 20. De plus ou en variante, on envisage que l'insert 20 puisse comprendre une entrée séparée de la buse 50. Dans cet agencement en variante, l'entrée comprend une valve à une voie, de sorte que le fluide 15 peut être amené à la chambre 28 par l'entrée, mais ne peut pas être déchargé de la chambre 28 par l'entrée.

Comme représenté sur les figures 1 à 9, l'insert 20 comprend un piston 60. Le piston 60 est configuré pour effectuer un mouvement de va-et-vient dans la chambre 28 le long de l'axe de rotation A_{R}. Le piston 60 comprend une surface 70 configurée pour servir de paroi d'extrémité de la chambre 28. La surface 70 est exposée au fluide 15 et à la pression générée par le fluide 15 dans la chambre 28. Dans le mode de réalisation décrit, la paroi de piston 70 et/ou le piston 60 sont annulaires. Le piston 60 est configuré pour circonscrire la paroi d'insert 26. Le piston 60 comprend un joint d'étanchéité 64 pour réaliser une étanchéité contre la paroi d'insert 26 et une surface entourant l'insert 60 dans l'arbre d'entraînement 100. Dans le mode de réalisation décrit, le piston 60 peut réaliser une étanchéité contre l'arbre d'entraînement 100. Cependant, on envisage que l'insert 20 puisse comprendre une paroi d'insert externe supplémentaire s'étendant de manière concentrique autour de la paroi d'insert 26. Dans cet agencement en variante, le piston 60 peut réaliser une étanchéité contre la paroi d'insert externe supplémentaire, plutôt que l'arbre d'entraînement 100. Le piston 60 peut comprendre un joint à labyrinthe ou rainure 62 pour recevoir le joint d'étanchéité 64 ; cependant, l'homme du métier notera que le piston 60 peut comprendre d'autres agencements d'étanchéité tel qu'un joint d'étanchéité intégral. Le piston 60 est configuré pour se déplacer entre une première position et une seconde position dans la chambre 28. Le piston 60 est adjacent à la première extrémité 22 de l'insert 20 dans la première position (voir les figures 4 à 5 et 8 à 9) et le piston 60 adjacent à la seconde extrémité 24 de l'insert 20 lorsque le piston 60 est dans la seconde position (voir les figures 2 à 3 et 6). L'insert 20 comprend un élément de sollicitation 66 positionné entre le piston 60 et la paroi d'insert 26. Dans le mode de réalisation décrit, l'élément de sollicitation 66 est un ressort, cependant, l'homme du métier notera que d'autres éléments de sollicitation peuvent être compatibles avec le système 10. L'élément de sollicitation 66 est configuré pour se comprimer dans un état comprimé et s'étendre dans un état étendu.

Comme représenté sur les figures 1 à 5 du mode de réalisation décrit, l'élément de sollicitation 62 peut être retenu sur la paroi d'insert 26 au niveau de la seconde extrémité 24 de l'insert 20. Dans le mode de réalisation décrit, l'élément de sollicitation 66 est sollicité vers l'état étendu. Ainsi, le piston 60 est sollicité vers la première position. Le déplacement du piston 60 de la première position vers la seconde position est configuré pour comprimer l'élément de sollicitation 66. La compression de l'élément de sollicitation 66 génère une force de rappel. L'extension de l'élément de sollicitation 66 de l'état comprimé à l'état étendu est configurée pour déplacer le piston 60 de la seconde position vers la première position.

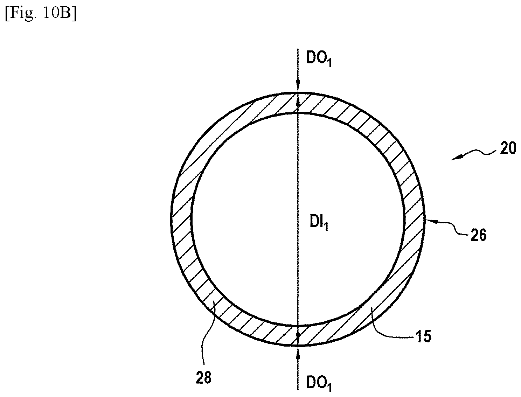

Le fluide 15 est amené à l'insert 15 par la buse 50 pendant la rotation de l'arbre d'entraînement 100 et donc la rotation de l'insert 20. Comme illustré par la figure 10B, la rotation de l'arbre d'entraînement 100 et donc la rotation de l'insert 20, génère un volume de rotation du fluide 15, qui exerce une force centrifuge dans la chambre 28 de l'insert 20. Dans le mode de réalisation décrit, le volume de rotation du fluide 15 forme une forme toroïdale due à la force centrifuge générée par la rotation de l'arbre d'entraînement 100. La force centrifuge du volume de rotation du fluide 15 augmente la pression dans la chambre 28. La pression accrue dans la chambre 28 augmente la pression exercée sur la surface 70 du piston 60 dans la chambre 28. De plus ou en variante, on envisage que l'augmentation du fluide 15 dans la chambre 28 provoque une augmentation de la pression de fluide exercée sur la surface 70 du piston 60. Comme illustré par les figures 2 et 4 du mode de réalisation décrit, la pression accrue sur la surface 70 du piston 60 vient à bout de l'élément de sollicitation 66 et amène le piston 60 à se déplacer de la première position à la seconde position. Lorsque le piston 60 se déplace de la première position vers la seconde position, l'air est poussé hors de la chambre 28 par l'ouverture 30. Le déplacement du piston 60 de la première position à la seconde position comprime l'élément de sollicitation 66 de l'état étendu à l'état comprimé, lorsque le fluide 15 entre par la buse 50. Comme illustré par la figure 10A, l'arrêt de la rotation de l'arbre d'entraînement 100, et donc l'arrêt de la rotation de l'insert 20, établit le volume de rotation du fluide 15 dans un volume de fluide affaissé 15, qui réduit l'exercice de la force centrifuge dans la chambre 28 de l'insert 20. On envisage que le terme « arrêt de la rotation », tel qu'utilisé ici, peut être compris comme signifiant une période pendant laquelle la rotation de l'arbre d'entraînement 100 ralentit jusqu'à l'état de repos de l'arbre d'entraînement 100 et/ou lorsque la rotation de l'arbre d'entraînement 100 cesse et/ou est arrêtée. La réduction de l'exercice de la force centrifuge diminue la pression dans la chambre 28. La pression réduite dans la chambre 28 diminue la pression exercée sur la surface 70 du piston 60 dans la chambre 28. Ainsi, la pression réduite dans la chambre 28 permet à l'élément de sollicitation 66 de venir à bout de la pression exercée sur la surface 70 du piston 60. L'élément de sollicitation 66 s'étend de l'état comprimé à l'état étendu, ce qui déplace le piston 60 de la seconde position vers la première position. Le déplacement du piston 60 de la seconde position à la première position force le fluide 15 hors de la buse 50 sous forme de jet de fluide 15.

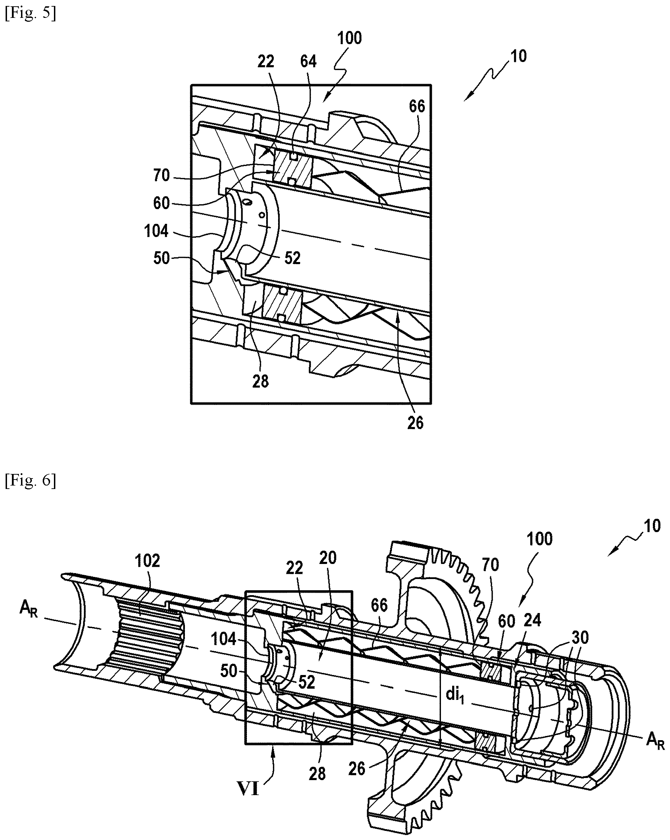

Comme représenté sur les figures 6 à 9, en variante, l'élément de sollicitation 66 peut être retenu sur la paroi d'insert 26 au niveau de la première extrémité 22 de l'insert. Dans l'agencement en variante, l'élément de sollicitation 66 est sollicité vers l'état comprimé. Ainsi, le piston 60 est sollicité vers la première position. Le déplacement du piston 60 de la première position à la seconde position est configuré pour étendre l'élément de sollicitation 66. L'extension de l'élément de sollicitation 66 génère une force de rappel. La compression de l'élément de sollicitation 66 de l'état étendu à l'état comprimé est configurée pour déplacer le piston 60 de la seconde position à la première position.

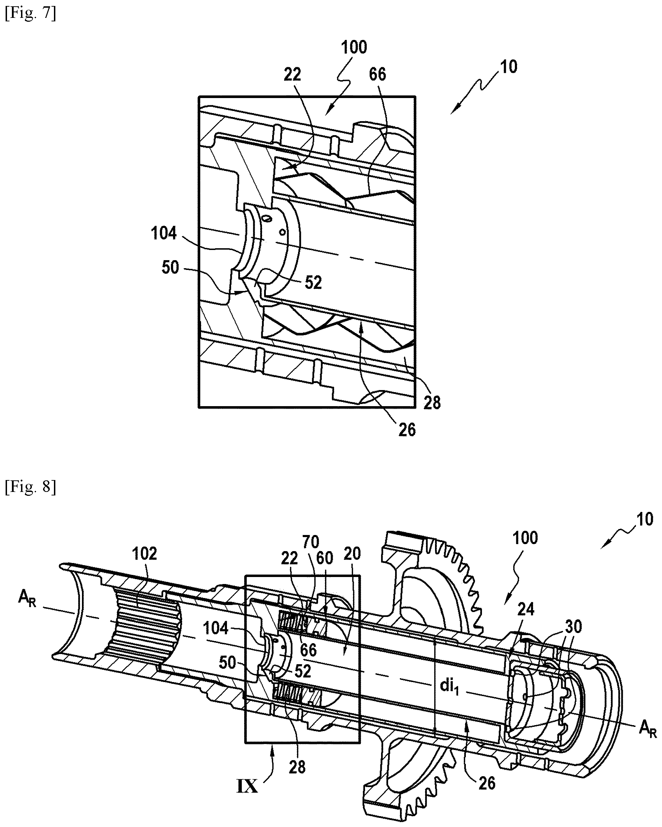

Comme abordé ci-dessus, le fluide 15 est amené à l'insert 15 par la buse 50 pendant la rotation de l'arbre d'entraînement 100 et donc la rotation de l'insert 20. La rotation de l'arbre d'entraînement 100 et donc la rotation de l'insert 20, génère le volume de rotation du fluide 15, qui exerce la force centrifuge dans la chambre 28 de l'insert 20. La force centrifuge du volume de rotation du fluide 15 augmente la pression dans la chambre 28. La pression accrue dans la chambre 28 augmente la pression exercée sur la surface 70 du piston 60 dans la chambre 28. De plus ou en variante, on envisage que l'augmentation du fluide 15 dans la chambre 28 provoque une augmentation de la pression de fluide exercée sur la surface 70 du piston 60. Comme représenté sur les figures 6 et 8, la pression accrue sur la surface 70 du piston 60 vient à bout de l'élément de sollicitation 66 et amène le piston 60 à se déplacer de la première position à la seconde position. Lorsque le piston 60 se déplace de la première position à la seconde position, l'air est poussé hors de la chambre 28 par l'ouverture 30. Le déplacement du piston 60 de la première position vers la seconde position étend l'élément de sollicitation 66 de l'état comprimé à l'état étendu, lorsque le fluide 15 entre par la buse 50. L'arrêt de la rotation de l'arbre d'entraînement 100, et donc l'arrêt de la rotation de l'insert 20, établit le volume de rotation du fluide 15 dans le volume de fluide affaissé 15, ce qui réduit l'exercice de la force centrifuge dans la chambre 28 de l'insert 20. La réduction de l'exercice de la force centrifuge diminue la pression dans la chambre 28. La pression réduite dans la chambre 28 diminue la pression exercée sur la surface 70 du piston 60 dans la chambre 28. Ainsi, la pression réduite dans la chambre 28 permet à l'élément de sollicitation 66 de venir à bout de la pression exercée sur la surface 70 du piston 60. L'élément de sollicitation 66 effectue une compression de l'état étendu à l'état comprimé, qui déplace le piston 60 de la seconde position à la première position. Le déplacement du piston 60 de la seconde position à la première position force le fluide 15 hors de la buse 50 sous forme de jet de fluide 15.

Comme représenté sur les figures 10A à 10B, l'insert 20 a un diamètre interne DI₁ et un diamètre externe DO₁. Comme représenté sur les figures 2, 6 et 8, l'arbre d'entraînement 100 a un diamètre interne di₁. Dans le mode de réalisation décrit, le diamètre externe DO₁ de l'insert est inférieur au diamètre interne di₁ de l'arbre d'entraînement 100. La différence entre le diamètre externe DO₁ de l'insert 20 et le diamètre interne di₁ de l'arbre d'entraînement 100 permet de définir la chambre 28 entre l'insert 20 et l'arbre d'entraînement 100. Cependant, on envisage que l'insert 20 puisse comprendre une paroi d'insert externe supplémentaire s'étendant de manière concentrique autour de la paroi d'insert 26. Dans cet agencement en variante, la chambre 28 peut être défini entre la paroi d'insert 26 et la paroi d'insert externe supplémentaire. La chambre 28 peut permettre de faire de la place pour que le fluide se déplace entre l'insert 20 et l'arbre d'entraînement 100.

Le positionnement de l'insert 20 dans l'arbre d'entraînement 100 est configuré pour être maintenu pendant l'état de rotation et l'état de repos. Comme représenté sur la figure 1, la paroi d'insert 26 peut être montée par serrage et/ou à la presse dans l'arbre d'entraînement 100 pour maintenir la position et empêcher la rotation de l'insert 20 dans l'arbre d'entraînement 100. Cependant, on envisage que l'homme du métier notera que la paroi d'insert 26 peut être fixée dans l'arbre d'entraînement 100 par d'autres configurations, comme le filetage, la liaison ou le collage dans l'arbre d'entraînement 100. De plus ou en variante, l'insert 20 peut comprendre un anneau de retenue 32 au niveau de la seconde extrémité 24 pour maintenir la retenue axiale de l'insert 20 dans l'arbre d'entraînement 100. Dans le mode de réalisation décrit, la paroi d'insert 26 est rigide. La paroi d'insert 26 peut être réalisée à partir d'acier ou d'aluminium, mais on envisage que l'homme du métier notera que la paroi d'insert 26 peut être réalisée à partir de n'importe quel autre matériau rigide qui peut être compatible avec l'insert 20.

En fonctionnement, l'arbre d'entraînement 100 effectue une transition de l'état de repos à l'état de rotation. L'insert 20 est configuré pour être alimenté avec le fluide 15 par la buse 50 pendant l'état de rotation et pour amener le fluide aux cannelures 102 par le biais de la buse 50 pendant l'état de repos. Pendant la rotation, le fluide 15 est amené de la conduite d'alimentation à l'insert 20. Le fluide 15 pénètre dans l'insert 20 par la première ouverture 54 de la buse 50, se déplace par le conduit 52 et pénètre dans la chambre 28 par la seconde ouverture 56 de la buse. Pendant la rotation de l'arbre d'entraînement 100, le fluide 15 forme le volume de rotation dans l'insert 20 et génère la force centrifuge. La force centrifuge augmente la pression dans la chambre 28 de l'insert 20 qui agit sur la surface 70 du piston 60 pour déplacer le piston 60 de la première position à la seconde position. Lorsque le fluide 15 pénètre dans la chambre 28, le déplacement du piston 60 vers la seconde position étend ou comprime l'élément de sollicitation 66. L'extension ou la compression de l'élément de sollicitation 66 crée une force de rappel, qui est exploitée pour décharger un jet dirigé de fluide 15 par la buse 50 suite à l'achèvement du cycle de fonctionnement.

A l'achèvement du cycle de fonctionnement, l'arbre d'entraînement 100 effectue une transition de l'état de rotation à l'état de repos. Pendant l'arrêt de la rotation de l'arbre d'entraînement 100 et/ou lorsque la rotation de l'arbre d'entraînement 100 s'arrête, le fluide 15 n'est plus fourni à la chambre 28 de l'insert 20. De plus, pendant l'arrêt de la rotation de l'arbre d'entraînement 100 et/ou lorsque la rotation de l'arbre d'entraînement 100 s'arrête, le volume de rotation du fluide 15 s'établit dans le volume de fluide affaissé 15. L'arrêt de la rotation de l'insert 20 diminue la pression centrifuge du volume de fluide 15 dans la chambre 28 de l'insert 20. La décharge de pression dans la chambre 28 de l'insert 20 amène l'élément de sollicitation 66 à s'étendre ou se comprimer pour déplacer le piston 60 de la seconde position à la première position. Le déplacement du piston 60 de la seconde position à la première position force un jet de fluide 15 hors de la buse 50 vers les cannelures 102. Le jet de fluide 15 peut se déplacer sur de plus longues distances, avec un moment plus élevé, sans dissipation - en contraste au fluide affaissé 15 illustré sur la figure 10A, qui éclabousse ou se déverse hors de l'insert 20 et sur le premier déversoir 104 et la première interface 106. La buse 50 est configurée pour diriger le jet de fluide 15 vers des zones spécifiques dans l'arbre d'entraînement 100. Le jet de fluide 15 est déchargé par la première interface 106 et au-delà du premier déversoir 104 jusqu'aux cannelures 102 de l'arbre d'entraînement 100, les cannelures 102 de l'arbre d'entraînement d'accessoire 120 et/ou l'axe central de l'arbre d'entraînement d'accessoire 120. En raison de l'écoulement dirigé plus robuste du fluide 15 éjecté de la buse 50, le fluide 15 amené à l'axe central de l'arbre d'entraînement d'accessoire 120 atteint également d'autres cannelures 102 qui peut être présentes plus loin sur l'arbre d'entraînement d'accessoire 120.

Bien que la présente invention a été décrite ici en référence aux modes de réalisation particuliers, il faut comprendre que ces modes de réalisation ne sont qu'illustratifs des principes et des applications de la présente invention.

Il est prévu que la spécification et les exemples soient considérés comme exemplaires uniquement, avec la véritable portée de l'invention qui est indiquée par les revendications suivantes.

De plus, toutes les caractéristiques décrites d'un appareil peuvent être transposées, seules ou en combinaison, à un procédé et vice versa.

## Revendications

1. Insert (20) pour amener un fluide (15) aux cannelures (102) d'un arbre d'entraînement (100), l'insert (20) comprenant :
une paroi d'insert (26) s'étendant entre une première extrémité (22) et une seconde extrémité (24) de l'insert et comprenant une surface externe ;
une chambre (28) entourant la paroi d'insert (26) pour stocker un fluide (15), la chambre (28) étant définie entre la surface externe de la paroi d'insert (26) et l'arbre d'entraînement (100) ; et
un piston (60) ayant une surface (70) configurée pour être exposée au fluide (15), le piston (60) étant configuré pour se déplacer entre une première position et une seconde position dans la chambre (28), et le piston (60) étant sollicité vers la première position par un élément de sollicitation (66) ;
dans lequel, une augmentation d'une alimentation de fluide (15) dans la chambre (28) provoque le déplacement du piston (60) vers la seconde position et une diminution de l'alimentation de fluide (15) dans la chambre (28) provoque le déplacement du piston (60) vers la première position.

2. Insert (20) selon la revendication 1, dans lequel l'insert (20) est configuré pour tourner autour d'un axe de rotation (A_{R}).

3. Insert (20) selon la revendication 2, dans lequel le piston (60) se déplace axialement le long de la surface externe de la paroi d'insert (26).

4. Insert (20) selon l'une quelconque des revendications 1 à 3, dans lequel l'augmentation d'alimentation de fluide (15) dans la chambre (28) provoque l'exercice de pression sur la surface (70) du piston (60).

5. Insert (20) selon l'une quelconque des revendications 1 à 4, dans lequel le déplacement du piston (60) vers la première position force le fluide (15) hors de la chambre (28).

6. Insert (20) selon l'une quelconque des revendications 1 à 5, dans lequel l'élément de sollicitation (66) est positionné entre la paroi d'insert (26) et le piston (60), et l'élément de sollicitation est configuré pour effectuer la transition entre un état étendu et un état comprimé.

7. Insert (20) selon l'une quelconque des revendications 1 à 6, dans lequel la surface (70) est annulaire.

8. Insert (20) selon l'une quelconque des revendications 1 à 7, dans lequel le piston (60) est configuré pour réaliser une étanchéité contre la paroi d'insert (26).

9. Insert (20) selon l'une quelconque des revendications 1 à 8, dans lequel l'insert comprend une buse (50) configuré pour décharger un jet de fluide (15).

10. Système (10) pour amener un fluide (15) aux cannelures (102) d'un arbre d'entraînement (100), le système (10) comprenant :
un arbre d'entraînement (100) comprenant des cannelures (102) et un déversoir (104) positionné de manière adjacente aux cannelures (102),
l'arbre d'entraînement (100) étant configuré pour tourner autour d'un axe de rotation (A_{R}) ;
un insert (20) selon l'une quelconque des revendications 1 à 9, la paroi d'insert (26) s'étendant de manière concentrique avec l'arbre d'entraînement (100) ; et
dans lequel une augmentation de pression dans la chambre (28) pendant la rotation de l'arbre d'entraînement (100) provoque le déplacement du piston (60) vers la seconde position et une réduction de pression dans la chambre pendant l'arrêt de la rotation de l'arbre d'entraînement (100) provoque le déplacement du piston (60) vers la première position.

11. Système (10) selon la revendication 10, dans lequel l'insert (20) est en communication avec le déversoir (104) et les cannelures (102) au niveau d'une interface (106) dans l'arbre d'entraînement (100).

12. Système (10) selon la revendication 11, dans lequel l'insert (20) est selon la revendication 9 et la buse (50) est configurée pour diriger le jet de fluide (15) vers l'axe de rotation (A_{R}) et à travers l'interface (106) et au-delà du déversoir (104) jusqu'aux cannelures (102) lorsque la rotation de l'arbre d'entraînement (100) est arrêtée.

13. Système (10) selon l'une quelconque des revendications 10 à 12, dans lequel l'insert (20) est fixé à l'arbre d'entraînement (100) afin de maintenir la position et empêcher la rotation de l'insert (20) dans l'arbre d'entraînement (100).

14. Système (10) selon l'une quelconque des revendications 10 à 13, dans lequel le piston (60) est configuré pour réaliser une étanchéité contre une surface entourant l'insert (20) dans l'arbre d'entraînement (100).

15. Système (10) selon l'une quelconque des revendications 10 à 14, dans lequel l'insert (20) a un diamètre externe (DO₁) qui est inférieur à un diamètre interne (di₁) de l'arbre d'entraînement (100) de sorte que la chambre (28) est définie entre l'insert (20) et une surface entourant l'insert (20) dans l'arbre d'entraînement (100).

## Patentansprüche

1. Einsatz (20) zum Leiten eines Fluids (15) zu den Keilnuten (102) einer Antriebswelle (100), wobei der Einsatz (20) umfasst:
eine Einsatzwand (26), die sich zwischen einem ersten Ende (22) und einem zweiten Ende (24) des Einsatzes erstreckt und eine Außenfläche umfasst,
eine Kammer (28), welche die Einsatzwand (26) umgibt, um ein Fluid (15) zu speichern, wobei die Kammer (28) zwischen der Außenfläche der Einsatzwand (26) und der Antriebswelle (100) definiert ist, und
einen Kolben (60), der eine Oberfläche (70) aufweist, die dazu ausgestaltet ist, dem Fluid (15) ausgesetzt zu sein, wobei der Kolben (60) dazu ausgestaltet ist, sich zwischen einer ersten Position und einer zweiten Position in der Kammer (28) zu verschieben, und der Kolben (60) durch ein Vorspannelement (66) zu der ersten Position hin vorgespannt wird,
wobei eine Steigerung einer Versorgung mit Fluid (15) in der Kammer (28) die Verschiebung des Kolbens (60) zu der zweiten Position hin auslöst und eine Senkung der Versorgung mit Fluid (15) in der Kammer (28) die Verschiebung des Kolbens (60) zu der ersten Position hin auslöst.

2. Einsatz (20) nach Anspruch 1, wobei der Einsatz (20) dazu ausgestaltet ist, sich um eine Drehachse (A_{R}) zu drehen.

3. Einsatz (20) nach Anspruch 2, wobei der Kolben (60) sich axial entlang der Außenfläche der Einsatzwand (26) verschiebt.

4. Einsatz (20) nach einem der Ansprüche 1 bis 3, wobei die Steigerung der Versorgung mit Fluid (15) in der Kammer (28) die Ausübung von Druck auf die Oberfläche (70) des Kolbens (60) auslöst.

5. Einsatz (20) nach einem der Ansprüche 1 bis 4, wobei die Verschiebung des Kolbens (60) zu der ersten Position hin das Fluid (15) aus der Kammer (28) zwingt.

6. Einsatz (20) nach einem der Ansprüche 1 bis 5, wobei das Vorspannelement (66) zwischen der Einsatzwand (26) und dem Kolben (60) positioniert ist, und das Vorspannelement dazu ausgestaltet ist, den Übergang zwischen einem erweiterten Zustand und einem zusammengezogenen Zustand zu bewirken.

7. Einsatz (20) nach einem der Ansprüche 1 bis 6, wobei die Oberfläche (70) ringförmig ist.

8. Einsatz (20) nach einem der Ansprüche 1 bis 7, wobei der Kolben (60) dazu ausgestaltet ist, eine Dichtung gegen die Einsatzwand (26) zu bilden.

9. Einsatz (20) nach einem der Ansprüche 1 bis 8, wobei der Einsatz eine Düse (50) umfasst, die dazu ausgestaltet ist, einen Fluidstrahl (15) abzulassen.

10. System (10) zum Leiten eines Fluids (15) zu den Keilnuten (102) einer Antriebswelle (100), wobei das System (10) umfasst:
eine Antriebswelle (100), die Keilnuten (102) und einen Überlauf (104) umfasst, der benachbart zu den Keilnuten (102) positioniert ist, wobei die Antriebswelle (100) dazu ausgestaltet ist, sich um eine Drehachse (A_{R}) zu drehen,
einen Einsatz (20) nach einem der Ansprüche 1 bis 9, wobei sich die Einsatzwand (26) auf konzentrische Weise mit der Antriebswelle (100) erstreckt, und
wobei eine Erhöhung des Drucks in der Kammer (28) während der Drehung der Antriebswelle (100) die Verschiebung des Kolbens (60) zu der zweiten Position hin auslöst und eine Verringerung des Drucks in der Kammer während des Halts der Drehung der Antriebswelle (100) die Verschiebung des Kolbens (60) zu der ersten Position hin auslöst.

11. System (10) nach Anspruch 10, wobei der Einsatz (20) in Kommunikation mit dem Überlauf (104) und den Keilnuten (102) an einer Schnittstelle (106) in der Antriebswelle (100) steht.

12. System (10) nach Anspruch 11, wobei der Einsatz (20) nach Anspruch 9 ist und die Düse (50) dazu ausgestaltet ist, den Fluidstrahl (15) zu der Drehachse (A_{R}) hin und durch die Schnittstelle (106) und über den Überlauf (104) hinweg bis zu den Keilnuten (102) zu lenken, wenn die Drehung der Antriebswelle (100) angehalten wird.

13. System (10) nach einem der Ansprüche 10 bis 12, wobei der Einsatz (20) an der Antriebswelle (100) befestigt ist, um die Position zu halten und die Drehung des Einsatzes (20) in der Antriebswelle (100) zu verhindern.

14. System (10) nach einem der Ansprüche 10 bis 13, wobei der Kolben (60) dazu ausgestaltet ist, eine Dichtung gegen eine den Einsatz (20) umgebende Oberfläche in der Antriebswelle (100) zu bilden.

15. System (10) nach einem der Ansprüche 10 bis 14, wobei der Einsatz (20) einen Außendurchmesser (DO₁) aufweist, der kleiner als ein Innendurchmesser (di₁) der Antriebswelle (100) ist, sodass die Kammer (28) zwischen dem Einsatz (20) und einer den Einsatz (20) umgebenden Oberfläche in der Antriebswelle (100) definiert ist.

## Claims

1. An insert (20) for supplying a fluid (15) to splines (102) of a drive shaft (10), the insert (20)comprising:
an insert wall (26) extending between a first end (22) and a second end (24) of the insert and comprising an outer surface;
a chamber (28) surrounding the insert wall (26) for storing a fluid (15), the chamber (28) being defined between the outer surface of the insert wall (26) and the drive shaft (100);
a piston (60) having a surface (70) configured to be exposed to the fluid (15), the piston (60) configured to move between a first position and a second position within the chamber (28), and the piston (60) biased toward the first position by a bias member (66); and
wherein, an increase in supply of the fluid (15) in the chamber (28) causes the piston (60) to move toward the second position and a decrease in supply of the fluid (15) in the chamber (28) causes the piston (60) to move toward the first position.

2. The insert (20) according to claim 1, wherein the insert (10) is configured to rotate around an axis of rotation (A_{R}).

3. The insert (20) according to claim 2, wherein the piston (60) moves axially along the outer surface of the insert wall (26).

4. The insert (20) according to any of claims 1 to 3, wherein increase in supply of the fluid (15) in the chamber (28) causes pressure to be exerted on the surface (70) of the piston (60).

5. The insert (20) according to any of claims 1 to 4, wherein movement of the piston (60) toward the first position forces the fluid (15) out of the chamber (28).

6. The insert (20) according to any of claims 1 to 5, wherein the bias member (66) is positioned between the insert wall (26) and the piston (60), and the bias member is configured to transition between an extended state and a compressed state.

7. The insert (20) according to any of claims 1 to 6, wherein the surface (70) is annular.

8. The insert according to any of claims 1 to 7, wherein the piston (60) is configured to seal against the insert wall (26).

9. The insert (20) according to any of claims 1 to 8, wherein the insert includes a nozzle (50) configured to discharge a jet of the fluid (15).

10. A system (10) for supplying a fluid (15) to splines (102) of a drive shaft (100), the system (10) comprising:
a drive shaft (100) including splines (102) and a weir (104) positioned adjacent the splines (102), the drive shaft (100) configured to rotate about an axis of rotation (AR);
an insert (20) according to any of claims 1 to 9, the insert wall (26) extending concentrically with the drive shaft (100); and
wherein, an increase in pressure in the chamber (28) during rotation of the drive shaft (100) causes the piston (60) to move toward the second position and a decrease in pressure in the chamber during cessation of rotation of the drive shaft (100) causes the piston (60) to move toward the first position.

11. The system (10) according to claim 10, wherein the insert (20) is in communication with the weir (104) and the splines (102) at an interface (106) within the drive shaft (100).

12. The system (10) according to claim 11, wherein the insert (20) is according to claim 9 and the nozzle (50) is configured to target the jet of the fluid (15) toward the axis of rotation (A_{R}) and through the interface (106) and past the weir (104) to the splines (102) when rotation of the drive shaft (100) is ceased.

13. The system (10) according to any of claims 10 to 12, wherein the insert (20) is secured to the drive shaft (100) to maintain position and anti-rotation of the insert (20) within the drive shaft (100).

14. The system (10) according to any of claims 10 to 13, wherein the piston (60) is configured to seal against a surface surrounding the insert (20) within the drive shaft (100).

15. The system (10) according to any of claims 10 to 14, wherein the insert (20) has an outside diameter (DO₁) which is less than an inside diameter (di₁) of the drive shaft (100) so that the chamber (28) is defined between the insert (20) and a surface surrounding the insert (20) within the drive shaft (100).
